# FASCICULE DE BREVET EUROPEEN

(11) **EP 0 711 123 B1**
(45) Date de publication et mention de la délivrance du brevet: **02.05.1997**
(21) Numéro de dépôt: 94922277.2
(22) Date de dépôt: 20.07.1994
(51) Int. Cl.: A47J 31/60

(54) **MACHINE A INFUSION COMPORTANT UN DISPOSITIF DE PURIFICATION D'EAU**
INFUSIONSGERÄT MIT EINER WASSERFILTRIERVORRICHTUNG
BREWING APPARATUS INCLUDING A WATER PURIFYING DEVICE

(30) Priorité: 29.07.1993 FR 9309375
(43) Date de publication de la demande: 15.05.1996
(73) Titulaire: MOULINEX S.A., F-93170 Bagnolet (FR)
(72) Inventeur: JOUATEL, Christian Bernard, F-61250 Radon (FR); LANDAIS, Francis Pierre Jacques, décédé (FR)
(74) Mandataire: Busquets, Jean-Pierre
(86) Numéro de dépôt international: FR9400903
(87) Numéro de publication internationale: WO9503733

(56) Documents cités:
- EP-A- 0 377 192
- WO-A-92/16136
- DE-A- 4 200 566
- FR-A- 2 207 092
- NL-A- 9 000 719

## Description

La présente invention concerne une machine à infusion, telle que par exemple une cafetière du type goutte-à-goutte, comportant un réservoir d'eau froide qui incorpore un dispositif de purification d'eau et qui comprend une sortie d'eau reliée à un chauffe-eau.

Pour garantir un bon arôme de l'infusion, il est connu de placer dans le réservoir un filtre adapté à purifier l'eau destinée à alimenter le chauffe-eau. A cet effet, un filtre de purification d'eau de type connu se compose d'une cartouche amovible en matière relativement souple, remplie d'une substance de purification d'eau comportant des granules de charbon actif. Cette cartouche formant filtre de purification d'eau est placée de manière intime dans un bassin, de profil adapté, formé dans le fond du réservoir, et comporte des orifices d'entrée d'eau et des orifices de sortie par lesquels l'eau purifiée, après passage à travers la cartouche-filtre, s'écoule dans le chauffe-eau. Une telle machine est connue du document DE-A-4 200 566.

Toutefois, du fait qu'une telle cartouche-filtre est appliquée contre les parois du bassin conformé dans le fond du réservoir, celle-ci est sujette à se déformer par suite d'une augmentation de son volume due à un gonflement de la masse de la substance de purification par l'eau qu'elle retient, d'où une certaine difficulté d'extraire la cartouche-filtre hors du réservoir lors d'un changement de celle-ci.

L'invention a notamment pour but de pallier ces inconvénients.

Selon l'invention, le dispositif de purification d'eau comporte une cartouche amovible comprenant une partie basse formant un godet qui est destiné à être monté de manière étanche dans un bassin approprié formé dans le fond du réservoir, et dans lequel est logé de façon amovible un sachet-filtre contenant une substance de purification d'eau, ainsi qu'une partie haute formant un chapeau qui est situé dans le prolongement du godet et qui est adapté à fermer celui-ci, ledit chapeau de la cartouche comprenant au moins une ouverture par laquelle entre l'eau du réservoir, et ledit godet de la cartouche comprenant au moins une ouverture par laquelle l'eau s'écoule dans le chauffe-eau après passage à travers le sachet-filtre.

Grâce à cette réalisation, on comprend que la cartouche amovible constitue désormais un simple organe de support et de protection du sachet-filtre, lequel sachet-filtre est facilement extractible de la cartouche. De plus, la cartouche- et le sachet-filtre forment un ensemble hygiénique et d'emploi commode pour l'utilisateur.

Selon une autre caractéristique importante de l'invention, la face supérieure du sachet-filtre possède un rebord périphérique venant s'appliquer de manière étanche sur la bordure du godet de la cartouche. Ce positionnement particulier du sachet-filtre assure à la fois une parfaite étanchéité entre le chapeau et le godet de la cartouche, et un excellent maintien en place du sachet-filtre dans le godet de la cartouche, garantissant ainsi en permanence un passage de toute l'eau du réservoir à travers le sachet-filtre sans risque de détachement de ce dernier. Des caractéristiques préférentielles sont contenues dans les revendications dépendantes 2-9.

D'autres caractéristiques et avantages de l'invention ressortiront d'ailleurs de la description qui va suivre, à titre d'exemple, en référence aux dessins annexés dans lesquels :
- la figure 1 est une vue partielle en coupe verticale d'une machine à infusion selon l'invention, montrant un clapet anti-retour en position fermée ;
- la figure 2 est une vue en coupe selon la ligne II-II de la figure 1 ;
- la figure 3 est une vue identique à la figure 1, le clapet anti-retour étant en position ouverte ;
- la figure 4 est une vue en coupe verticale, à plus grande échelle, du dispositif de purification d'eau illustré aux figures 1 et 3 ;
- la figure 5 est une vue éclatée, en coupe verticale, du godet et du chapeau constituant la cartouche du dispositif de purification d'eau illustré à la figure 4 ;
- la figure 6 est une vue en coupe d'un détail du chapeau selon la ligne VI-VI de la figure 5 ;
- la figure 7 est une vue en coupe verticale du godet et du chapeau de la figure 5 une fois assemblés ;
- la figure 8 est une vue en perspective du dispositif de purification d'eau, montrant la cartouche en position ouverte prête à recevoir un sachet-filtre ; et
- la figure 9 est une vue en perspective du dispositif de purification d'eau de la figure 8, après insertion du sachet-filtre et fermeture de la cartouche.

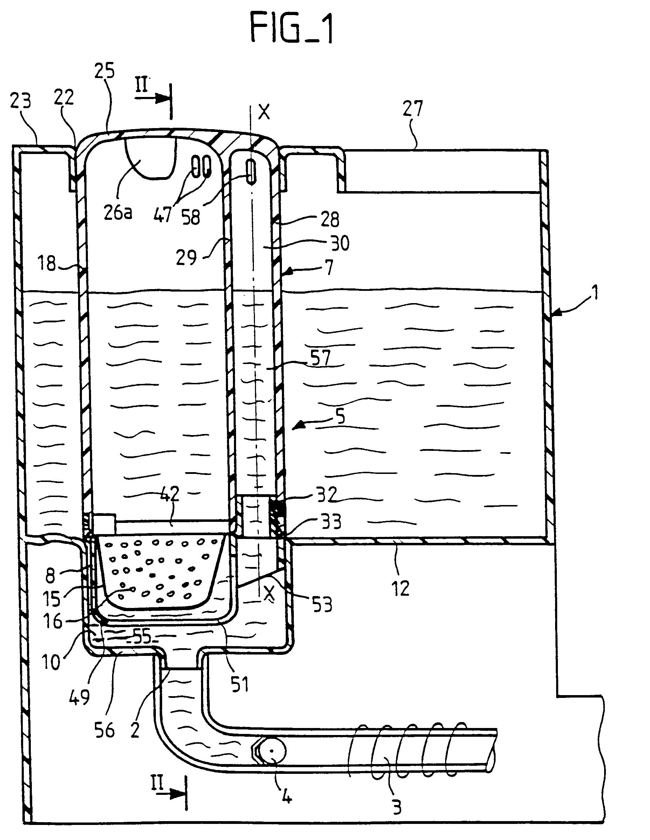

Sur les figures 1, 2 et 3, on n'a représenté qu'une partie d'une machine à infusion, telle que par exemple une cafetière du type goutte-à-goutte, à savoir : un réservoir d'eau froide 1 dont la sortie 2 est reliée à un chauffe-eau 3 via un clapet anti-retour 4 représenté schématiquement et qui incorpore un dispositif de purification d'eau, désigné par la référence générale 5.

D'une manière connue en soi, la sortie du chauffe-eau alimente, par un tube d'eau chaude ascendant, une goulotte d'arrosage d'un filtre destiné à recevoir de la mouture de café et disposé au-dessus d'un collecteur de café.

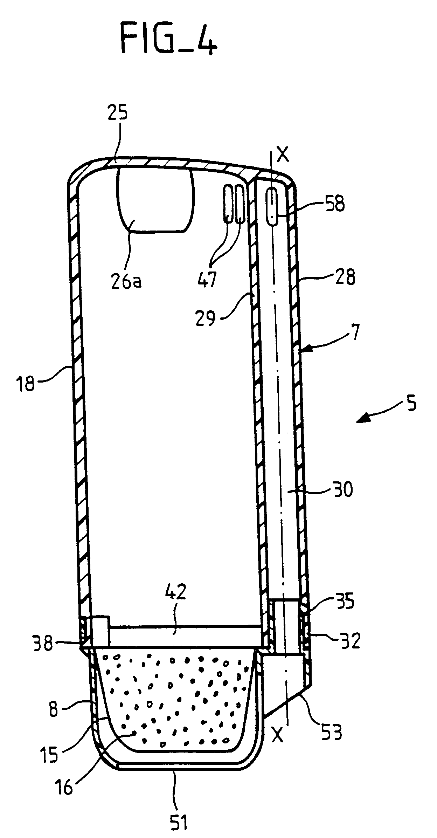

Selon l'invention, le dispositif de purification d'eau 5 (figures 1, 2, 3 et 4) comporte une cartouche amovible 7, réalisée en une matière plastique telle que, par exemple, le polypropylène, et comprenant une partie basse formant un godet 8 qui est monté d'une manière étanche, par exemple par contact intime, dans un bassin 10 (figures 1, 2 et 3), de profil adapté, formé dans le fond 12 du réservoir 1, et dans lequel est monté de façon amovible un sachet-filtre 15 contenant une substance de purification d'eau 16, ainsi qu'une partie haute formant un chapeau 18 destiné à fermer le godet 8.

Le sachet-filtre 15 est réalisé en une matière perméable à l'eau, telle que par exemple un feutre, et la substance de purification d'eau 16 qu'il renferme est composée de granules de charbon actif traité par des sels d'argent ; une telle substance supprime le goût et l'odeur du chlore, retient une partie des impuretés organiques et empêche la prolifération des bactéries.

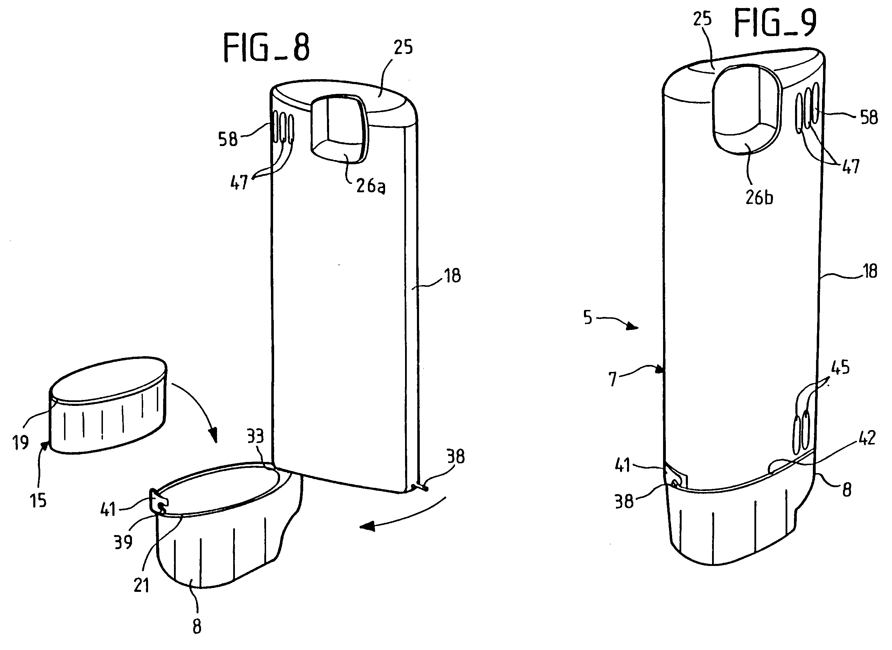

Le sachet-filtre 15 est maintenu en place, d'une manière étanche, dans le godet 8 de la cartouche 7 grâce à un rebord périphérique 19 (mieux visible à la figure 8) formé sur la face supérieure plane du sachet-filtre 15 et venant s'appliquer sur la bordure 21 (figure 8) du godet 8.

Ce type de maintien en place du sachet-filtre dans le godet de la cartouche est particulièrement avantageux car il garantit un passage de toute l'eau à travers le sachet-filtre sans risque de détachement de celui-ci.

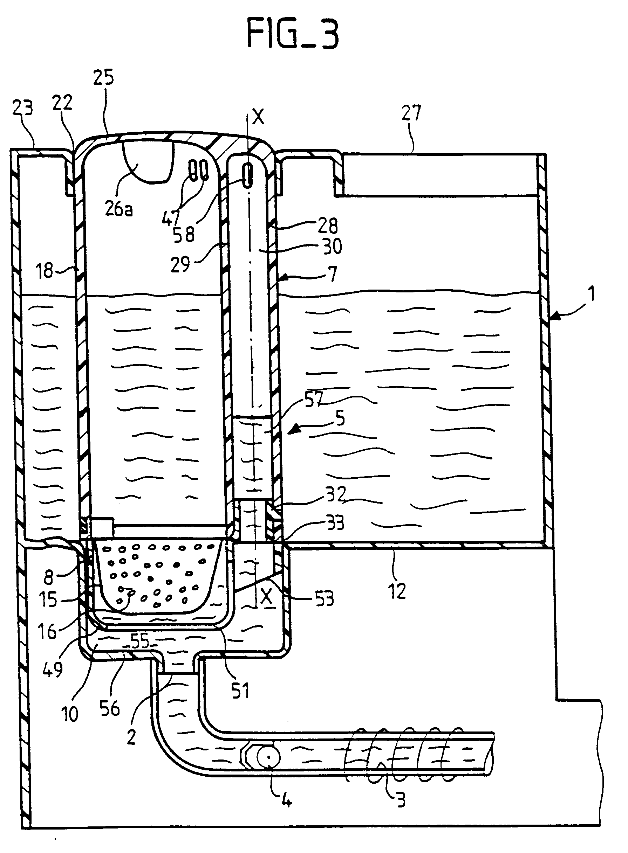

Comme le montrent les figures 1 et 3, le chapeau 18 de la cartouche 7 présente une forme allongée et s'étend verticalement dans le prolongement du godet 8 en faisant légèrement saillie à travers une ouverture appropriée 22 pratiquée dans un couvercle 23 du réservoir 1. De plus, le chapeau 18 de la cartouche 7 présente, de part et d'autre de sa partie supérieure ou fond 25 en saillie, un léger renfoncement 26a respectivement 26b, mieux visible aux figures 8 et 9, formant un organe de préhension destiné au retrait de la cartouche 7. On a représenté en 27 sur les figures 1 et 3 une ouverture de remplissage d'eau pratiquée dans le couvercle 23 du réservoir 1.

Le chapeau 18 de la cartouche 7 présente une paroi latérale 28 et une paroi interne 29 conformée de manière à délimiter, avec cette paroi latérale 28, un conduit vertical cylindrique 30, d'axe XX, dont la partie basse est destinée à recevoir un tourillon vertical creux 32 formant un gond réalisé sur le côté du bord supérieur 33 du godet 8 de la cartouche, de sorte que le chapeau 18 est susceptible de pivoter autour du tourillon 32 du godet 8.

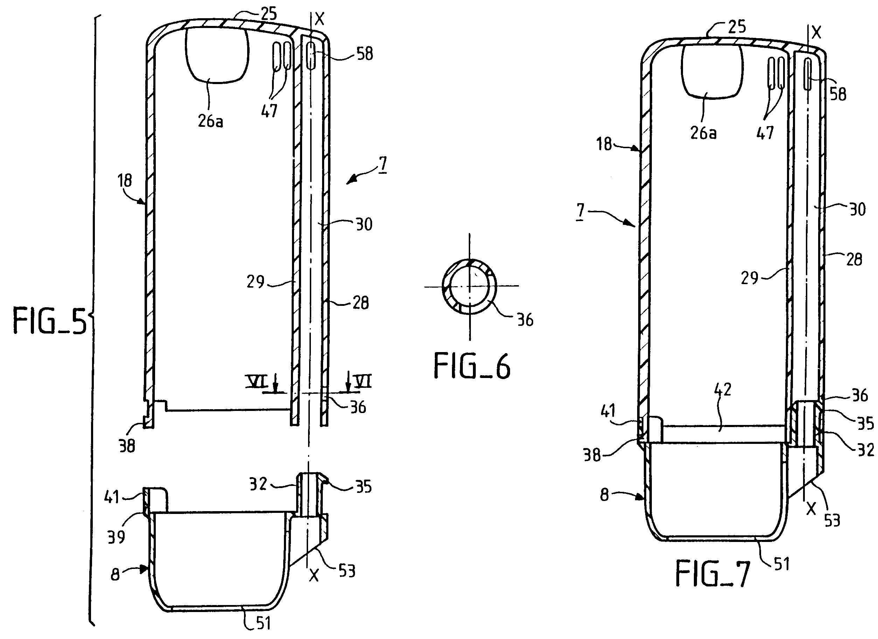

Comme le montrent les figures 5 et 6, le tourillon 32 du godet 8 de la cartouche 7 (sans le sachet-filtre) possède latéralement un nez 35 destiné à s'engager d'une manière indémontable dans une coulisse 36 sensiblement semi-circulaire (figure 6) ménagée dans la paroi latérale 28 du chapeau 18 de la cartouche 7, de manière à former une charnière indémontable.

Le godet 8 et le chapeau 18 de la cartouche 7 comportent de plus des moyens de fixation amovible, en l'occurrence du type à baïonnette, constitués par un ergot 38 formé à la base de la paroi latérale 28 du chapeau 18 et destiné à s'encliqueter dans un cran approprié 39 réalisé dans une petite aile verticale 41 formée en bordure du godet 8, du côté opposé au tourillon 32, voir figure 5.

La figure 7 montre la cartouche 7 (sans le sachet-filtre) une fois le godet 8 et le chapeau 18 assemblés et fixés l'un à l'autre.

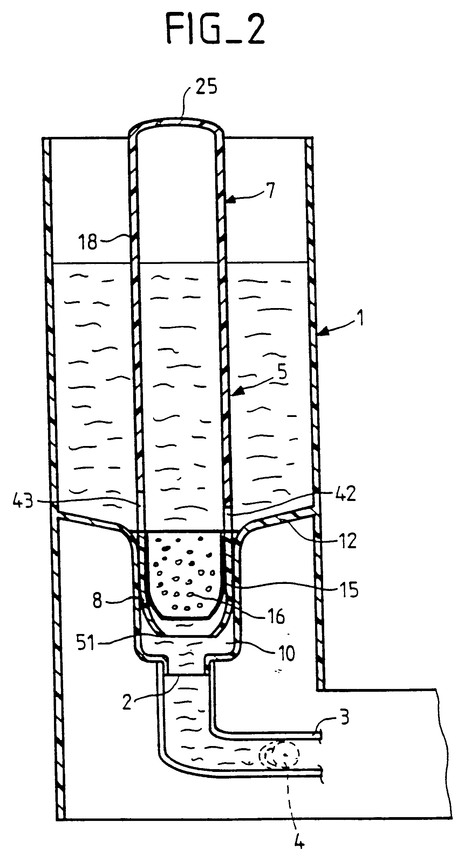

Comme on le voit sur la figure 2, deux interstices 42,43, formés par des échancrures dans la paroi du chapeau 18, sont ménagés dans la zone de jonction entre le chapeau 18 et le godet 8 de la cartouche 7 et sont destinés au passage de l'eau venant du réservoir 1 afin d'alimenter le sachet-filtre 15. Le passage de l'eau à l'intérieur du chapeau 18 de la cartouche 7 peut également s'effectuer par des ouvertures supplémentaires 45 (figure 9), par exemple au nombre de deux, ménagées dans la partie basse du chapeau 18. On a représenté en 47 des orifices de mise à l'air libre, par exemple au nombre de deux, pratiqués dans la partie haute du chapeau 18.

Dans l'exemple de réalisation illustré à la figure 1, le godet 8 de la cartouche 7 s'étend, depuis le fond 12 du réservoir 1, sur une partie seulement de la profondeur du bassin 10 et présente, d'une part, dans son fond 49 une fente 51 qui se prolonge latéralement pour déboucher dans le conduit 30, et d'autre part, dans un pan latéral incliné, une ouverture 53 mettant en communication directe le conduit 30 avec le bassin 10 ; l'espace 55 ménagé entre le fond 49 du godet 8 de la cartouche et le fond 56 du bassin 10, ainsi que le conduit 30, constituent donc un réservoir tampon, désigné en 57, situé en amont du clapet anti-retour 4. Ce réservoir tampon 57, en partie intégré dans la cartouche 7, possède un orifice de mise à l'air libre 58 pratiqué dans la partie haute du chapeau 18 de la cartouche 7.

Le fonctionnement d'un tel réservoir d'eau à dispositif de purification d'eau incorporé selon l'invention est le suivant.

Lors du remplissage du réservoir 1, le clapet anti-retour 4 étant ouvert, l'eau pénètre à l'intérieur du chapeau 18 de la cartouche 7 via les interstices 42,43 et traverse le sachet-filtre 15 en s'écoulant, à l'état purifié, par les ouvertures 51,53 du godet 8 de la cartouche, ainsi que par la sortie 2 du réservoir pour venir remplir le chauffe-eau 3. Au cours du chauffage de l'eau, le clapet anti-retour 4 étant fermé, l'eau chaude arrose la mouture de café présente dans le filtre et simultanément le réservoir tampon 57 se remplit d'eau purifiée jusqu'à équilibre des niveaux d'eau dans le réservoir 1, le chapeau 18 de la cartouche 7 et le réservoir tampon 57 comme illustré à la figure 1. Par suite de l'ouverture du clapet anti-retour 4, le chauffe-eau 3 est alors aussitôt alimenté en eau purifiée prélevée dans le réservoir tampon 57 comme illustré à la figure 3. Cette alimentation du chauffe-eau par le réservoir tampon permet ainsi d'assurer un écoulement continu d'eau purifiée sans perte de charge occasionnée par la substance de purification d'eau contenue dans le sachet-filtre.

Le changement du sachet-filtre 15 en réponse à tout indicateur approprié signalant l'état de saturation du sachet-filtre après un nombre déterminé d'utilisations s'effectue de la manière suivante.

L'utilisateur extrait la cartouche 7 du réservoir 1, et ce de façon aisée grâce à l'organe de préhension 26a-26b en saillie du couvercle 23 du réservoir, puis déverrouille le chapeau 18 par pivotement antihoraire pour ouvrir le godet 8 et retire ensuite le sachet-filtre 15. Après insertion d'un nouveau sachet-filtre 15 dans le godet 8 de la cartouche 7, et verrouillage du chapeau 18 par pivotement horaire comme illustré à la figure 8, l'utilisateur introduit alors la cartouche 7 (figure 9) dans le réservoir 1 de la cafetière par l'ouverture 22 du couvercle 23 du réservoir ; la cartouche 7 étant mise en place dans le réservoir 1, figure 1, le nouveau sachet-filtre 15 est prêt à fonctionner.

## Revendications

1. Machine à infusion comportant un réservoir d'eau froide (1) qui incorpore un dispositif de purification d'eau (5) et qui comprend une sortie d'eau (2) reliée à un chauffe-eau (3), ledit dispositif de purification d'eau (5) comportant une cartouche amovible (7) comprenant une partie basse formant un godet (8) qui est destiné à être monté de manière étanche dans un bassin approprié (10) formé dans le fond (12) du réservoir (1), et qui contient une substance de purification d'eau (16), ainsi qu'une partie haute formant un chapeau (18) qui est situé dans le prolongement du godet (8) et qui est adapté à fermer celui-ci, ledit chapeau (18) de la cartouche comprenant au moins une ouverture (42;43) par laquelle entre l'eau du réservoir, et ledit godet (8) de la cartouche comprenant au moins une ouverture (51;53) par laquelle l'eau à l'état purifié s'écoule dans le chauffe-eau (3),
**caractérisée en ce que** la substance de purification d'eau (16) est contenue dans un sachet-filtre (15) qui est logé de façon amovible dans le godet (8) de la cartouche (7) et qui présente une face supérieure possèdant un rebord périphérique (19) venant s'appliquer de manière étanche sur la bordure (21) du godet (8) de la cartouche (7).

2. Machine à infusion selon la revendication 1,
**caractérisée en ce que** le chapeau (18) de la cartouche (7) s'étend verticalement au moins sur toute la hauteur du réservoir (1) et comporte un fond (25), une paroi latérale (28) et une paroi interne verticale (29) délimitant avec ladite paroi latérale un conduit cylindrique (30) dans la partie basse de laquelle est logé un tourillon vertical (32) formé sur un bord supérieur du godet (8) de la cartouche, de sorte qu'un pivotement du chapeau (18) autour du tourillon (32) du godet (8) autorise l'ouverture ou la fermeture dudit godet.

3. Machine à infusion selon la revendication 2,
**caractérisée en ce que** ledit tourillon (32) du godet (8) présente latéralement un nez (35) engagé d'une manière indémontable dans une coulisse (36) sensiblement semi-circulaire ménagée dans la paroi latérale (28) du chapeau (18) de la cartouche (7).

4. Machine à infusion selon la revendication 2 ou 3,
**caractérisée en ce que** le godet (8) et le chapeau (18) de la cartouche (7) présentent, du côté opposé à l'ensemble tourillon-conduit, des moyens coopérants (38,39) de fixation amovible.

5. Machine à infusion selon la revendication 4,
**caractérisée en ce que** les moyens de fixation amovible comportent un ergot (38) formé à la base de la paroi latérale (28) du chapeau (18) et venant s'encliqueter dans un cran approprié (39) réalisé dans une petite aile verticale (41) formée en bordure du godet (8).

6. Machine à infusion selon l'une des revendications 2 à 5, comprenant un clapet anti-retour (4) interposé entre la sortie du réservoir (1) et l'entrée du chauffe-eau (3),
**caractérisée en ce que** le godet (8) de la cartouche (7) s'étend verticalement, depuis le fond (12) du réservoir (1), sur une partie seulement de la profondeur du bassin (10), et en ce que le tourillon (32) du godet (8) est creux et débouche, d'une part, directement dans le conduit (30) du chapeau (18), et d'autre part, dans ledit bassin (10) via une ouverture correspondante (53) pratiquée dans le godet (8), de sorte que l'espace (55) ménagé entre le fond (49) du godet (8) et le fond (56) du bassin (10), ainsi que ledit conduit (30) du chapeau, constituent un réservoir tampon (57) situé en amont dudit clapet (4), ce réservoir tampon (57) possédant au moins un orifice de mise à l'air libre (58) pratiqué dans la partie supérieure de la paroi latérale (28) du chapeau (18) de la cartouche (7).

7. Machine à infusion selon l'une des revendications 2 à 6,
**caractérisée en ce que** l'ouverture (42;43) par laquelle l'eau du réservoir entre dans le chapeau (18) de la cartouche (7) est constituée par un interstice qui est formé dans la zone de jonction entre le chapeau (18) et le godet (8) de la cartouche et qui débouche au-dessus du sachet-filtre (15), ledit chapeau (18) de la cartouche (7) possédant, dans la partie supérieure de sa paroi latérale, au moins un orifice de mise à l'air libre (47).

8. Machine à infusion selon l'une des revendications 2 à 7,
**caractérisée en ce que** le réservoir (1) possède un couvercle (23) comprenant une ouverture (22) d'introduction de la cartouche, qui est située à l'aplomb du bassin (10), ainsi qu'une ouverture (27) de remplissage du réservoir, le chapeau (18) de la cartouche (7) présentant un organe de préhension (26a-26b) destiné au retrait de la cartouche.

9. Machine à infusion selon l'une quelconque des revendications précédentes,
**caractérisée en ce que** le sachet-filtre (15) est réalisé en une matière perméable à l'eau, telle qu'un feutre.

## Claims

1. Infusion machine including a cold-water container (1) which incorporates a water purification device (5) and which comprises a water outlet (2) connected to a water heater (3), the said water purification device (5) including a removable cartridge (7) comprising a bottom part forming a cup (8) which is designed to be mounted sealingly in a suitable basin (10) formed in the bottom (12) of the container (1), and which contains a water purification substance (16), and a top part forming a cap (18) which is located in line with the cup (8) and which is able to close it, the said cap (18) of the cartridge comprising at least one opening (42; 43) through which the water from the container enters, and the said cup (8) of the cartridge comprising at least one opening (51; 53) through which the water in a purified state flows into the water heater (3), characterized in that the water purification substance (16) is contained in a filter sachet (15) which is removably housed in the cup (8) of the cartridge (7) and which has a top face having a peripheral rim (19) which is applied sealingly against the edge (21) of the cup (8) of the cartridge (7).

2. Infusion machine according to claim 1, characterized in that the cap (18) of the cartridge (7) extends vertically at least over the entire height of the container (1) and has an end (25), a lateral wall (28) and a vertical internal wall (29) defining, with the said lateral wall, a cylindrical channel (30) in the bottom part of which is housed a vertical journal (32) formed on a top edge of the cup (8) of the cartridge, so that a pivoting of the cap (18) about the journal (32) on the cup (8) allows the said cup to open or close.

3. Infusion machine according to claim 2, characterized in that the said journal (32) on the cup (8) has on its side a nose piece (35) engaged non-detachably in a slide (36) which is substantially semi-circular, provided in the lateral wall (28) of the cap (18) of the cartridge (7).

4. Infusion machine according to claim 2 or 3, characterized in that the cup (8) and the cap (18) of the cartridge (7) have, on the side opposite to the journal-channel unit, cooperating means (38, 39) of removable fixing.

5. Infusion machine according to claim 4, characterized in that the removable fixing means include a lug (38) formed at the base of the lateral wall (28) of the cap (18) and snapping into a suitable notch (39) produced in a small vertical flange (41) formed on the edge of the cup (8).

6. Infusion machine according to one of claims 2 to 5, comprising a non-return valve (4) interposed between the outlet from the container (1) and the inlet to the water heater (3), characterized in that the cup (8) of the cartridge (7) extends vertically, from the bottom (12) of the container (1), over only part of the depth of the basin (10), and in that the journal (32) on the cup (8) is hollow and opens out, on the one hand, directly into the channel (30) of the cap (18) and, on the other hand, into the said basin (10) via a corresponding opening (53) made in the cup (8), so that the space (55) provided between the base (49) of the cup (8) and the base (56) of the basin (10), as well as the said channel (30) of the cap, constitute a buffer storage (57) located upstream of the said valve (4), this buffer storage (57) having at least one orifice open to atmosphere (58) made in the top part of the lateral wall (28) of the cap (18) of the cartridge (7).

7. Infusion machine according to one of claims 2 to 6, characterized in that the opening (42;43) through which the water from the container enters the cap (18) of the cartridge (7) consists of a gap which is formed in the area where the cap (18) and the cup (8) of the cartridge join and which opens out above the filter sachet (15), the said cap (18) of the cartridge (7) having, in the top part of its lateral wall, at least one orifice open to atmosphere (47).

8. Infusion machine according to one of claims 2 to 7, characterized in that the container (1) has a cover (23) comprising an opening (22) for the cartridge to be inserted, which is located directly above the basin (10), and an opening (27) for filling the container, the cap (18) of the cartridge (7) having gripping means (26a-26b) designed for the removal of the cartridge.

9. Infusion machine according to any one of the preceding claims, characterized in that the filter sachet (15) is made of a water-permeable material, such as a felt.

## Patentansprüche

1. Aufgußmaschine mit einem Kaltwassertank (1), der eine Wasserreinigungsvorrichtung (5) einschließt und der einen mit einem Wassererhitzer (3) verbundenen Wasserauslaß (2) aufweist, wobei die Wasserreinigungsvorrichtung (5) eine abnehmbare Kartusche (7) mit einem einen Napf (8) bildenden unteren Teil, der dicht abschließend in ein entsprechendes im Boden (12) des Wassertanks (1) ausgebildetes Becken (10) einsetzbar ist und der eine Substanz (16) zum Reinigen des Wassers enthält, sowie mit einen eine Kappe (18) bildenden oberen Teil aufweist, der sich in der Verlängerung des Napfes (8) befindet und diesen schließen kann, wobei die Kappe (18) der Kartusche mindestens einen Schlitz (42;43) aufweist, durch welchen das Wasser des Wassertanks eintritt, und der Napf (8) der Kartusche mindestens eine Öffnung (51, 53) aufweist, durch welche das gereinigte Wasser in den Wassererhitzer (3) gelangt, **dadurch gekennzeichnet, daß** die Reinigungssubstanz (16) in einem Filterbeutel (15) enthalten ist, welcher abnehmbar im Napf (8) der Kartusche (7) gehalten ist und welcher eine einen Umfangsumschlag (19) aufweisende obere Fläche hat, die dicht auf dem Rand (21) des Napfes (8) der Kartusche (7) zu liegen kommt.

2. Aufgußmaschine nach Anspruch 1, **dadurch gekennzeichnet, daß** die Kappe (18) der Kartusche (7) sich vertikal mindestens in voller Höhe des Wassertanks (1) erstreckt und einen oberen Bereich (Boden) (25), eine Seitenwand (28) und eine vertikale Innenwand (29) aufweist, welche mit der Seitenwand einen zylindrischen Kanal (30) begrenzt, in dessen unterem Bereich ein vertikaler Drehzapfen (32) angeordnet ist, der auf einem oberen Rand des Napfes (8) der Kartusche gebildet ist; so daß ein Schwenken der Kappe (18) um den Drehzapfen (32) des Napfes (8) das Öffnen oder Schließen des Napfes ermöglicht.

3. Aufgußmaschine nach Anspruch 2, **dadurch gekennzeichnet, daß** der Drehzapfen (32) des Napfes (8) seitlich eine Nase (35) aufweist, welche unablösbar in eine in der Seitenwand (28) der Kappe (18) der Kartusche (7) ausgebildete im wesentlichen halbkreisförmige Gleitbahn (36) eingreift.

4. Aufgußmaschine nach Anspruch 2 oder 3, **dadurch gekennzeichnet, daß** der Napf (8) und die Kappe (18) der Kartusche (7) auf der gegenüberliegenden Seite der Einheit Drehzapfen-Kanal miteinander zusammenwirkende Elemente (38; 39) zur lösbaren Befestigung aufweisen.

5. Aufgußmaschine nach Anspruch 4, **dadurch gekennzeichnet, daß** die Elemente zur lösbaren Befestigung einen Vorsprung (38) aufweisen, der im unteren Teil der Seitenwand (28) der Kappe (18) ausgebildet ist und in einen entsprechenden Haken (39) einrastet, der an einem kleinen vertikalen Flügel (42) angeordnet ist, der am Rand des Napfes (8) ausgebildet ist.

6. Aufgußmaschine nach einem der Ansprüche 2 bis 5, mit einem zwischen dem Auslaß des Tanks (1) und dem Einlaß des Wassererhitzers (3) angeordneten Rückschlagventil (4), **dadurch gekennzeichnet, daß** der Napf (8) der Kartusche (7) sich vertikal vom Boden (12) des Tanks (1) nur über einen Teil der Tiefe des Beckens (10) erstreckt, und daß der Drehzapfen (32) des Napfes (8) hohl ist und einerseits direkt in den Kanal (30) der Kappe (18) und andererseits durch eine im Napf (8) ausgebildete entsprechende Öffnung (53) in das Becken, (10) mündet, so daß der zwischen dem Boden (49) des Napfes (8) und dem Boden (56) des Beckens (10) ausgebildete Raum (55) sowie der Kanal (30) der Kappe einen Puffertank (57) bilden, der sich stromaufwärts vom Rückschlagventil (4) befindet, wobei dieser Puffertank (57) mindestens ein im oberen Bereich der Seitenwand (28) der Kappe (18) der Kartusche (7) ausgebildetes Belüftungsloch (58) aufweist.

7. Aufgußmaschine nach einem der Ansprüche 2 bis 6, **dadurch gekennzeichnet, daß** der Schlitz (42; 43), durch welchen das Wasser des Tanks in die Kappe (18) der Kartusche (7) gelangt, durch einen Ausschnitt gebildet wird, der in der Verbindungszone zwischen der Kappe (18) und dem Napf (8) der Kartusche ausgebildet ist und oberhalb des Filterbeutels (15) mündet, wobei die Kappe (18) der Kartusche (7) im oberen Bereich ihrer Seitenwand mindestens ein Belüftungsloch (47) aufweist.

8. Aufgußmaschine nach einem der Ansprüche 2 bis 7, **dadurch gekennzeichnet, daß** der Tank (1) einen Deckel (23) mit einer Einführungsöffnung (22) für die Kartusche, die sich senkrecht zum Becken (10) befindet, sowie eine Einfüllöffnung (27) des Tanks aufweist, wobei die Kappe (18) der Kartusche (7) ein zum Herausnehmen der Kartusche dienendes Griffelement (26a, 26b) aufweist.

9. Aufgußmaschine nach einem der vorangehenden Ansprüche, **dadurch gekennzeichnet, daß** der Filterbeutel (15) aus wasserdurchlässigem Material, wie z.B. einem Filz, besteht.
